# EUROPÄISCHE PATENTSCHRIFT

(11) **EP 1 412 799 B1**
(45) Veröffentlichungstag und Bekanntmachung des Hinweises auf die Patenterteilung: **22.10.2008**
(21) Anmeldenummer: 00960324.2
(22) Anmeldetag: 24.07.2000
(51) Int. Cl.: G02B 23/24, B65H 75/34, H02G 11/02

(54) **VIDEO-ENDOSKOP MIT KABELTROMMEL**
VIDEO ENDOSCOPE WITH CABLE WINDER
VIDEO ENDOSCOPE AVEC ENROULEUR DE CABLE

(30) Priorität: 23.07.1999 DE 19933859
(43) Veröffentlichungstag der Anmeldung: 28.04.2004
(73) Patentinhaber: Zaar, Kersten, 72461 Albstadt (DE)
(72) Erfinder: Zaar, Kersten, 72461 Albstadt (DE)
(74) Vertreter: Schuster, Gregor
(86) Internationale Anmeldenummer: PCT/DE2000/002442
(87) Internationale Veröffentlichungsnummer: WO 2001/007954

(56) Entgegenhaltungen:
- US-A- 4 889 582
- US-A- 5 754 220
- PATENT ABSTRACTS OF JAPAN vol. 013, no. 505 (P-959), 14. November 1989 (1989-11-14) & JP 01 204014 A (OLYMPUS OPTICAL CO LTD), 16. August 1989 (1989-08-16)
- PATENT ABSTRACTS OF JAPAN vol. 015, no. 376 (P-1255), 24. September 1991 (1991-09-24) & JP 03 148618 A (OLYMPUS OPTICAL CO LTD), 25. Juni 1991 (1991-06-25)
- PATENT ABSTRACTS OF JAPAN vol. 2000, no. 06, 22. September 2000 (2000-09-22) & JP 2000 089131 A (OLYMPUS OPTICAL CO LTD), 31. März 2000 (2000-03-31)
- PATENT ABSTRACTS OF JAPAN vol. 015, no. 347 (P-1246), 3. September 1991 (1991-09-03) & JP 03 131813 A (OLYMPUS OPTICAL CO LTD), 5. Juni 1991 (1991-06-05)

## Beschreibung

### Stand der Technik:

Die Erfindung geht aus von einer Kabeltrommel für ein Video-Endoskop nach der Gattung des Hauptanspruches.

Aus der DE-OS 197 48 795 ist eine derartige Kabeltrommel für ein als Sonde ausgebildetes Video-Endoskop bekannt, in dessem Kopf neben einem Videosensor eine oder mehrere lichtemittierende Dioden (LED) oder Glühbirnen zur Beleuchtung der von der Videokamera aufzunehmenden Umgebung angeordnet sind. Die Stärke des von derartigen Lampen abgestrahlten Lichtes ist aber für viele Anwendungszwecke zu gering. Auch ist das Frequenzspektrum dieses Lichtes beschränkt, so dass das Licht keine Tageslichtqualität aufweist und meist eine bläulich bzw. gelbliche Farbe hat. Letztlich führt der Platzbedarf der Leuchtdioden bzw. der Glühbirnen zu einem relativ großen Gesamtdurchmesser des Sondenkopfes, sodass hierdurch das Spektrum der Anwendungsmöglichkeiten des bekannten Endoskopes stark einschränkt ist.

### Die Erfindung und ihre Vorteile:

Die erfindungsgemäße Kabeltrommel für ein als Sonde ausgebildetes Video-Endoskop mit den kennzeichnenden Merkmalen der Hauptanspruches hat demgegenüber den Vorteil, mittels eingebauter Lampen Licht mit Tageslichtqualität und größerer Stärke zur Verfügung zu stellen, das während des Auf- und Abwickelns der Sonde über Lichtleiterkabel zum Kopf des Endoskopes geleitet wird.

Nach einer vorteilhaften Ausgestaltung der Erfindung ist mit dem Gestell eine kreisförmige Abdeckscheibe fest verbunden, die einen zentralen nach vorne offenen Hohlraum der Kabeltrommel abschließt, der sich demgemäß insb. zur Aufnahme von solchem Zubehör für das Endoskop eignet, das am Gestell oder an der Abdeckscheibe zu befestigen ist, weil zu häufige Rotationsbewegungen die Funktionsfähigkeit des betreffenden Zubehörs beeinträchtigen könnten.

Nach einer weiteren vorteilhaften Ausgestlatung der Erfindung sind an der Abdeckscheibe mit dem Schleifring elektrisch verbundene Steckerbuchsen zur Ausgabe der von der Videokamera gelieferten Signale angeordnet, an die auf einfache Weise verschiedene Ausgabegeräte für Videosignale per Stecker angeschlossen werden können.

Nach einer weiteren vorteilhaften Ausgestaltung der Erfindung ist im Hohlraum eine wiederaufladbare Batterie angeordnet, die mit dem Gestell mechanisch verbunden und elektrisch an den Schleifring angeschlossen ist, wobei an der Abdeckscheibe eine mit der Batterie elektrisch verbundene Steckerbuchse für Gleichspannung angebracht ist. Außerdem kann die Batterie außerhalb des Hohlraumes am Gestell befestigt sein. Hierdurch wird ein netzunabhängiger Betrieb des Endoskopes samt Kabeltrommel möglich.

Nach einer weiteren vorteilhaften Ausgestaltung der Erfindung ist im Hohlraum ein mit dem Gestell mechanisch verbundenes Netzteil angeordnet, das elektrisch an den Schleifring angeschlossen ist, wobei an der Abdeckscheibe eine mit dem Netzteil verbundene Steckerbuchse für Wechselspannung angeordnet ist. Hierbei kann das Netzteil auch außerhalb des Hohlraumes am Gestell befestigt sein. Hierdurch wird auf kompakte Weise eine längerfristige Energieversorgung insb. der in der Kabeltrommel angeordneten Lampen gewährleistet, die wegen ihrer hohen Lichtleistung einen relativ großen Energieverbrauch haben.

Nach einer weiteren vorteilhaften Ausgestaltung der Erfindung ist der zentral liegende Hohlraum der Kabeltrommel von einem ringförmigen Hohlraum umgeben, der demgemäß drehbar gelagert ist, in dem die Lampen angeordnet sind und in den der Anfang des mindestens einen Lichtleiterkabels eingeführt ist. Hierbei eignet sich der ringförmige Hohlraum insb. für das Zubehör des Endoskopes, das in direkter Verbindung zum Lichtleiterkabel steht, sodass hiervon nur ein kurzes Stück in das Innere der Kabeltrommel eingeführt werden muss, um mit dem betreffenden Zubehör verbunden zu werden.

Nach einer weiteren vorteilhaften Ausgestaltung der Erfindung ist in dem ringförmigen Hohlraum eine Schaltung zur Steuerung des Videosensors angeordnet ist, die hierdurch ohne Zwischenschaltung eines Schleifringes direkt mit dem Videosensor verbindbar ist, sodass die Entstehung von Fehlersignalen und eine damit zusammenhängende Fehlsteuerungen des Videosensors weitgehend vermieden werden.

Nach einer weiteren vorteilhaften Ausgestaltung der Erfindung ist an der Wandung des ringförmigen Hohlraumes nahe den Lampen ein vom Netzteil mit Strom versorgter Lüfter zum Kühlen der Lampen angeordnet ist. Dies ermöglicht die Verwendung besonders lichtstarker Lampen, die durch einen großen Energieverbrauch und damit durch eine große Wärmeentwicklung gekennzeichnet sind.

Nach weiteren vorteilhaften Ausgestaltungen der Erfindung sind die Lampen als Bogenlampen, als Xenon-Lampen oder als Metall-Halid-Lampen ausgebildet, welche Lampen sich durch eine große Lichtausbeute und eine ausgeprägte Tageslichtqualität auszeichnen.

Weitere Vorteile und vorteilhafte Ausgestaltungen der Erfindung sind der nachfolgenden Beispielsbeschreibung, den Zeichnungen und den Ansprüchen entnehmbar.

### Zeichnungen:

Ein Ausführungsbeispiel der Erfindung ist in den Zeichnungen dargestellt und im Folgenden näher beschrieben. Es zeigen:
- Fig.1: eine teilweise aufgeschnittene Seitenansicht einer Kabeltrommel für ein Video-Endoskop gemäß der Erfindung,
- Fig. 2: ein Schnittbild der Kabeltrommel entlang der Linie A-A in Fig. 1 und
- Fig. 3: eine schematische Darstellung der lichttechnischen Elemente der Kabeltrommel.

### Beschreibung des Ausführungsbeispieles:

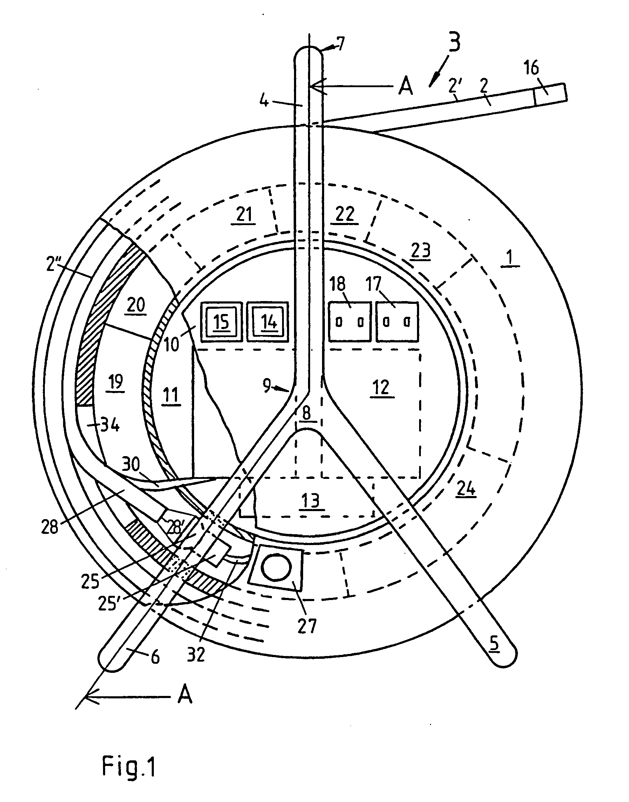

In Fig. 1 ist eine Kabeltrommel 1 für ein als Sonde 2 ausgebildetes Video-Endoskop 3 in Seitenansicht dargestellt, das insb. in der Industrie zur Untersuchung von unbeleuchteten Hohlräumen und Rohrleitungen Verwendung findet. Die Kabeltrommel 1 wird von einem Gestell 4 mit zwei Füßen 5 und 6 und einem Haltegriff 7 gehalten, das in der gewählten Darstellung die Form eines Sternes mit drei Strahlen 4, 5 und 6 hat, in dessem Zentrum 8 eine weiter unten näher erläuterte horizontal liegende Achse 9 angeordnet ist, auf der die Kabeltrommel 1 drehbar gelagert ist.

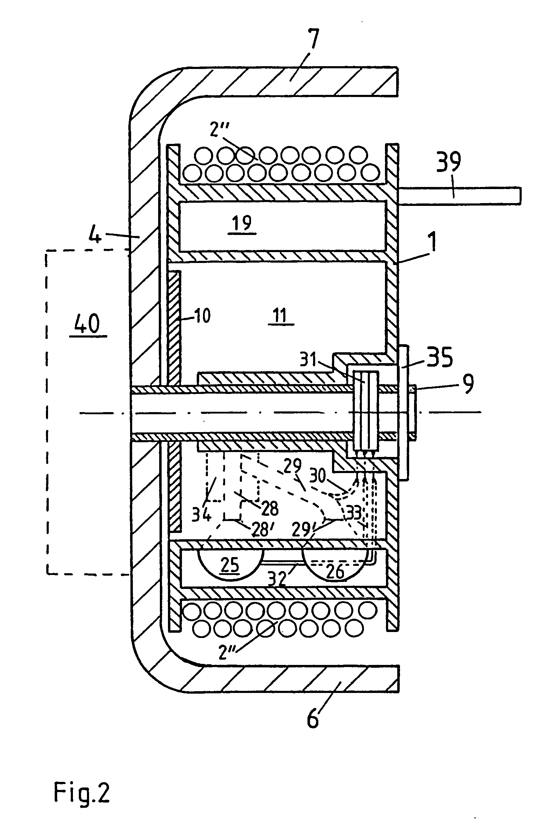

Gemäß Fig. 1 und 2 ist mit dem Gestell 4 eine kreisförmige Abdeckscheibe 10 fest verbunden, die einen dahinter liegenden, zentralen Hohlraum 11 der Kabeltrommel 1 nach vorne abschließt, in dem zum Betrieb des Endoskopes 3 erforderliche Zubehörteile untergebracht sein können, wie bspw. eine wiederaufladbare Batterie 12 und ein Netzteil 13. Weiterhin sind an der unbeweglichen Abdeckscheibe 10 Steckerbuchsen 14 und 15 zur Ausgabe von Signalen, die von einem am Ende der Sonde 2 angeordneten Videosensor 16 für Farbaufnahmen geliefert werden, eine weitere Steckerbuchse für Gleichspannung 17, und eine Steckerbuchse für Wechselspannung 18 angeordnet, um das Netzteil 13 mit Spannung zu versorgen.

Der zentral liegenden Hohlraum 11 der Kabeltrommel 1 ist von einem weiteren ringförmigen Hohlraum 19 umgeben, in dem weitere Zubehörteile 20 bis 23 des Endoskopes 3 untergebracht sein können, und in dem insb. eine Schaltung 24 zur Steuerung des Videosensors 16 und Lampen 25 und 26 angeordnet sind.

Je nach Ausgestaltung der erfindungsgemäßen Kabeltrommel 1 können die vom Videosensor 16 gelieferten Signale über einen weiter unten näher erläuterten Schleifring 31 und über die Steckerbuchsen 14, und 15 direkt ausgegeben werden, um ausgewertet zu werden. Möglich ist aber auch, die Schaltung 24 derart auszubilden, dass die Videosignale hiervon ausgewertet werden, um hierbei fertige Videosignale zu erzeugen, die über den Schleifring 31 und die Steckerbuchsen 14 oder 15 zur Ansteuerung eines Datensichtgerätes ausgegeben werden

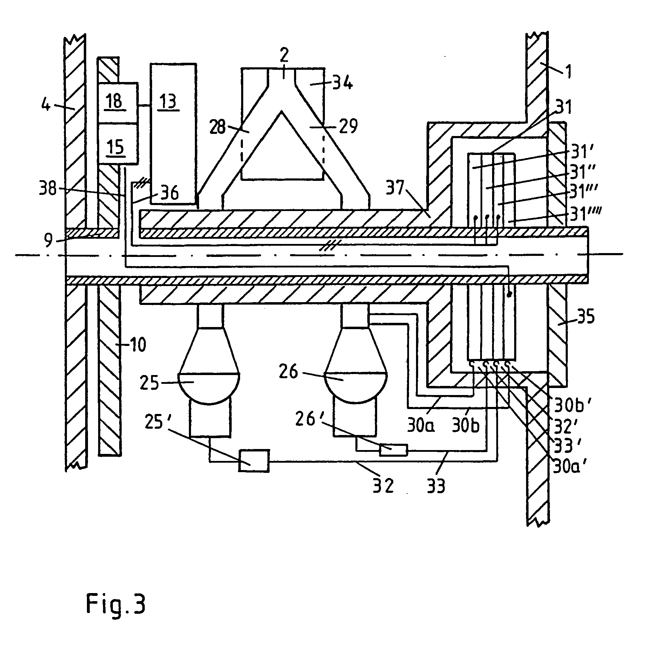

Die Lampen 25, 26 liefern Licht von Tageslichtqualität, können somit als Tageslichtlampen bezeichnet werden und sind als Bogenlampen, als Xenon-Lampe oder als Metall-Halid-Lampen ausgebildet, zu deren Betrieb Hochspannungsstarteinheiten 25', 26' (siehe Fig. 3) erforderlich sind. Im vorliegenden Ausführungsbeispiel weisen die Lampen 25, 26 Lampenreflektoren mit einer im Schnitt entlang der Längsachse der Lampe betrachtet elliptischen Form auf, um das abgestrahlte Licht weitestgehend zu bündeln. Denkbar ist aber auch, hierzu eine den Lampen vorgeschaltete Fokusierungsoptik zu verwenden. Versorgt werden die Lampen 25, 26 und der Videosensor 16 vom Netzteil 13 mit Strom. Die Wärmeentwicklung der Lampen 25, 26, die jeweils bis zu 300 Watt verbrauchen, macht es zudem erforderlich, in deren Nähe einen ebenfalls vom Netzteil 13 mit Strom versorgten Lüfter 27 zur Kühlung der Lampen 25, 26 anzuordnen. Um bei größeren Lichtstärken die Lichtleiterkabel 28, 29 vor Überhitzung zu schützen, können zwischen den Lampen 25, 26 und den Stirnflächen der Lichtleiterkabel 28, 29 Infrarotfilter angeordnet werden.

Die Kabeltrommel 1 dient in erster Linie zum Aufwickeln der Sonde 2, die aus einer Sondenschutzummantelung 2' besteht, in der die Lichtleiterkabel 28 und 29 und elektrische Leitungen 30 geführt sind. Die Lichtleiterkabel 28, 29 können aus Glas oder aus Kunststoff gefertigt sein. Moderne Lichtleiter ermöglichen hierbei Sondenlängen bis zu 30 Meter. Die Leitungen 30 versorgen zum einen den Videosensor 16 mit Spannung und können zum anderen die von dem Videosensor 16 gelieferten elektrischen Signale über den weiter unten näher beschriebenen Schleifring 31 direkt zu den Steckerbuchsen 14 und 15 leiten, um ausgewertet zu werden.

Die Lampen 25 und 26 sind gegenüber den Stirnseiten 28' und 29' am Anfang der Lichtleiterkabel 28 und 29 so angeordnet, dass das von den Lampen 25 und 26 abgestrahlte Licht vollständig in die Lichtleiterkabel 28 und 29 eingekoppelt wird. Per Lichtleiterkabel 28 und 29 wird das Licht zum am Ende der Sonde 2 angeordneten Videosensor 16 geleitet, an deren Stirnseite zum einen die einzelnen Lichtleiter enden, sodass das in ihnen geleitete Licht abgestrahlt werden kann, und an deren Stirnseite zum anderen eine Sensoroptik angeordnet ist, über die die vom Licht der Lichtleiter beleuchtete Umgebung aufgenommen werden kann. Die Sonde 2 und der Videosensor 16 haben hierbei weitgehend identische Durchmesser, der je nach Anwendungsgebiet 5 mm, 8 mm, 10 mm oder 12,7 mm betragen kann.

In Fig. 2 ist ein Schnitt durch die Kabeltrommel 1 entlang der abgeknickten Linie A-A in Fig. 1 dargestellt. Zu erkennen sind das Gestell 4 mit Haltegriff 7 und Fuß 5 und der Sondenwickel 2". Diese Perspektive erlaubt zudem einen Blick sowohl in den zentralen Hohlraum 11 als auch in den ringförmigen Hohlraum 19 der Kabeltrommel 1. Konkret sind bei der gewählten Blickrichtung die im ringförmigen Hohlraum 19 angeordneten Lampen 25 und 26 incl. deren Spannungsversorgungsleitungen 32 und 33 erkennbar. Die Lichtleiterkabel 28 und 29 sind gestrichelt gezeichnet, da bei der gewählten Blickrichtung der ringförmige Hohlraum 19 in dem Bereich, in dem die Lichtleiterkabel 28, 29 ein Stück geführt sind, bevor sie an einer Austrittsstelle 34 aus dem ringförmigen Hohlraum 19 austreten, vom zentralen Hohlraum 11 der Kabeltrommel 1 verdeckt werden.

Zu erkennen ist in Fig. 2 auch die mit dem Gestell 4 fest verbundene Achse 9, die zur Aufnahme elektrischer Leitungen als Rohr ausgebildet ist und auf ihrer dem Gestell 4 gegenüberliegenden Seite eine Haltescheibe 35 zum axialen Fixieren der Kabeltrommel 1 auf der Achse 9 und zudem den Schleifring 31 trägt, der mit den im Inneren der Achse 9 geführten Leitungen elektrisch verbunden ist (siehe hierzu insb. Fig. 3) und dessen Mantelfläche sowohl mit den Spannungsversorgungsleitungen 32 und 33 der Lampen 25 und 26 als auch mit den elektrischen Leitungen 30 des Videosensors 16 in elektrischem Schleifkontakt steht. Schließlich ist an der Kabeltrommel 1 ein Drehgriff 39 angebracht, um die Kabeltrommel 1 manuell in Drehung versetzen zu können.

Gestrichelt ist in Fig. 2 ein am Gestell 4 befestigbares Zusatzgehäuse 40 eingezeichnet, in dem das Netzteil 13 und die Batterie 12 angeordnet sein können.

In Fig. 3 sind ohne Berücksichtigung des inneren Aufbaus der Kabeltrommel 1 einige den Kern der Erfindung betreffende elektrische Details dargestellt. Die mit dem Gestell 4 mechanisch fest verbundene Achse 9 ist als Rohr dargestellt, auf dem die Abdeckscheibe 10 befestigt ist. Daran angebracht ist bspw. die Steckerbuchse 18 für Wechselspannung, die mit dem Netzteil 13 verbunden ist und die Steckerbuchse 15 für den Videosensor 16.

Die an das Netzteil 13 angeschlossenen Leitungen 36 für die Spannungsversorgung der Lampen 25 und 26 und des Videosensors 16 werden innerhalb der rohrförmigen Achse 9 bis zum darauf sitzenden Schleifring 31 geführt und elektrisch mit dem Schleifringkontakt 31' für die Spannungsversorgung des Videosensors 16 und mit den Schleifringkontakten 31'' und 31''' für die Spannungsversorgung der Lampen 25 und 26 verbunden. Der mit der elektrischen Leitung 30a zur Spannungsversorgung des Videosensors 16 verbundene Schleifkontakt 30a' steht hierbei mit dem Schleifringkontakt 31' in elektrischer Verbindung, der mit der elektrischen Leitung 33 zur Spannungsversorgung der Lampe 26 verbundene Schleifkontakt 33' steht mit dem Schleifringkontakt 31" in Verbindung, und der mit der elektrischen Leitung 32 zur Spannungsversorgung der Lampe 25 verbundene Schleifkontakt 32' ist elektrisch mit dem Schleifringkontakt 31''' verbunden. Schließlich ist auch die Signalleitung 30b des Videosensors 16 mit einem Schleifkontakt 30b' verbunden und hat eine elektrische Verbindung mit dem Schleifringkontakt 30''''. Dieser ist über eine im Inneren der Achse 9 geführten Videosignalleitung 38 mit der Steckerbuchse 15 für den Videosensor 16 verbunden, an die eine Schaltung zur Auswertung der Videosignale angeschlossen werden kann. Hierbei sind die Schleifkontakte 30a', 30b', 32' und 33' mit dem inneren hülsenförmigen Teil 37 der Kabeltrommel 1 mechanisch fest aber elektrisch isoliert verbunden.

Eingezeichnet ist in Fig. 3 auch die Haltescheibe 35, die fest auf der Achse 9 sitzt und ein axiales Verschieben der auf der Achse 9 drehbar angeordneten Kabeltrommel 1 verhindert.

Beim Betrieb der Sonde 2 wird das Licht der Lampen 25 und 26 in die Lichtleiterkabel 28 und 29 eingekoppelt, die sich gemeinsam mit den elektrischen Leitungen 30a und 30b für den Videosensor 16 zu einer Sonde 2 vereinigen und anschließend den Innenraum der Kabeltrommel 1 über die Austrittsstelle 34 verlassen. Bei den mit dem Auf- und Abwickeln der Sonde 2 einhergehenden Drehbewegungen der Kabeltrommel 1 bleiben in Fig. 3 das Gestell 4, die Achse 9, die Abdeckscheibe 10, der Schleifring 31 und die Haltescheibe 35 unbeweglich in Ruhestellung. Mit der Kabeltrommel 1 in Bewegung versetzt werden lediglich die Lampen 25, 26, die Lichtleiterkabel 28, 29 und die elektrischen Leitungen 30a, 30b, 32 und 33 samt den Schleifkontakten 30a', 30b', 32' und 33'.

Alle in der Beschreibung, in den nachfolgenden Ansprüchen und in den Zeichnungen dargestellten Merkmale können sowohl einzeln als auch in beliebiger Kombination miteinander erfindungswesentlich sein.

### Bezugszahlenliste

- 1: Kabeltrommel
- 2: Sonde
- 2': Sondenschutzummantelung
- 2": Sondenwickel
- 3: Video-Endoskop
- 4: Gestell
- 5, 6: Füße des Gestells 5
- 7: Haltegriff
- 8: Zentrum des Gestells 5
- 9: Achse
- 10: Abdeckscheibe
- 11: zentraler Hohlraum der Kabeltrommel 1
- 12: Batterie
- 13: Netzteil
- 14, 15: Steckerbuchsen für den Videosensor
- 16: Videosensor
- 17: Steckerbuchse für Gleichspannung
- 18: Steckerbuchse für Wechselspannung
- 19: ringförmiger Hohlraum der Kabeltrommel 1
- 20 bis 23: weitere Zubehörteile
- 24: Schaltung zur Steuerung des Videosensors 16
- 25, 26: Lampe, Tageslichtlampe
- 25', 26': Hochspannungsstarteinheiten der Lampen 25, 26
- 27: Lüfter
- 28, 29: Lichtleiterkabel
- 28', 29': Stirnseiten am Anfang der Lichtleiterkabel
- 30: elektrische Leitungen für den Videosensor 16
- 30a: Spannungsversorgungsleitung des Videosensors 16
- 30b: Signalleitung des Videosensors 16
- 30a',30b': Schleifkontakte
- 31: Schleifring
- 31',31'': Schleifringkontakte
- 31''',31'''': Schleifringkontakte
- 32, 33: Spannungsversorgungsleitungen der Lampen 25, 26
- 32', 33': Schleifkontakte
- 34: Austrittsstelle
- 35: Haltescheibe
- 36: Leitungen ausgehend vom Netzteil 13
- 37: innerer hülsenförmiger Teil der Kabeltrommel 1
- 38: Videosignalleitung
- 39: Dehgriff
- 40: Zusatzgehäuse

## Patentansprüche

1. Video-Endoskop System,
- mit einem Gestell (4) auf dem eine Kabeltrommel (1) drehbar gelagert ist,
-- wobei mit dem Gestell (4) eine kreisförmige Abdeckscheibe (10) fest verbunden ist, die einen zentralen nach vorne offenen Hohlraum (11) der Kabeltrommel (1) abschließt,
- mit einem als Sonde (2) ausgebildeten Endoskop (3),
-- welche Sonde (2) an ihrem freien Ende einen Videosensor (16) mit daran angeschlossenen, auf die Kabeltrommel (1) aufwickelbaren, Leitungen (30) zur Versorgung des Videosensors (16) mit elektrischer Spannung und zur Übertragung der von dem Videosensor (16) gelieferten elektrischen Signale aufweist,
--- welche Leitungen (30) innerhalb der Sonde (2) koaxial angeordnet sind und mit einem am Gestell (4) angebrachten Schleifring (31) elektrisch verbunden sind,
-- welche Sonde (2) mindestens ein Lichtleiterkabel (28, 29) aufweist, dessen Anfang in die Kabeltrommel (1) eingeführt ist,
--- wobei die Stirnflächen der vorgesehenen Lichtleiter am Anfang des mindestens einen Lichtleiterkabels (28, 29) gegenüber mindestens einer über den Schleifring (31) mit elektrischer Energie versorgten und mit der Kabeltrommel (1) mechanisch verbundenen Tageslichtlampe (25, 26) derart angeordnet sind, dass Licht in die Stirnflächen einkoppelbar ist,
-- wobei die Stirnflächen der Lichtleiter am Ende des mindestens einen Lichtleiterkabels (28, 29) nahe dem Videosensor (16) zur Beleuchtung der von dem Videosensor (16) auzunehmenden Umgebung mit dem aus den Lichtleiterenden austretenden Licht angeordnet sind.

2. Video-Endoskop System nach Anspruch 1, **dadurch gekennzeichnet, dass** an der Abdeckscheibe (10) mit dem Schleifring (31) elektrisch verbundene Steckerbuchsen (14, 15) zur Ausgabe der von dem Videosensor (16) gelieferten Signale angeordnet sind.

3. Video-Endoskop System nach Anspruch 1 oder 2, **dadurch gekennzeichnet, dass** im Hohlraum (11) eine wiederaufladbare Batterie (12) angeordnet ist, die mit dem Gestell (4) mechanisch verbunden und elektrisch an den Schleifring (31) angeschlossen ist, und dass an der Abdeckscheibe (10) eine mit der Batterie (12) elektrisch verbundene Steckerbuchse (17) für Gleichspannung angebracht ist.

4. Video-Endoskop System nach einem der vorhergehenden Ansprüche, **dadurch gekennzeichnet, dass** im Hohlraum (11) ein mit dem Gestell (4) mechanisch verbundenes Netzteil (13) angeordnet ist, das elektrisch an den Schleifring (31) angeschlossen ist, und dass an der Abdeckscheibe (10) eine mit dem Netzteil (13) verbundene Steckerbuchse für Wechselspannung (18) angeordnet ist.

5. Video-Endoskop System nach einem der vorhergehenden Ansprüche, **dadurch gekennzeichnet, dass** der zentral liegende Holraum (11) der Kabeltrommel (1) von einem ringförmigen Hohlraum (19) umgeben ist, in dem die Lampen (25, 26) angeordnet sind und in den der Anfang des mindestens einen Lichtleiterkabels (28, 29) eingeführt ist.

6. Video-Endoskop System nach Anspruch 5, **dadurch gekennzeichnet, dass** in dem ringförmigen Hohlraum (19) eine Schaltung (24) zur Steuerung des Videosensors (16) angeordnet ist.

7. Video-Endoskop System nach Anspruch 5 oder 6, **dadurch gekennzeichnet, dass** an der Wandung des ringförmigen Hohlraumes (19) nahe den Lampen (25, 26) ein vom Netzteil (13) mit Strom versorgter Lüfter (27) zum Kühlen der Lampen (25, 26) angeordnet ist.

8. Video-Endoskop System nach einem der vorhergehenden Ansprüche, **dadurch gekennzeichnet, dass** die Lampen (25, 26) als Bogenlampen ausgebildet sind.

9. Video-Endoskop System nach Anspruch 1 bis 7, **dadurch gekennzeichnet, dass** die Lampen (25, 26) als Xenon-Lampen ausgebildet sind.

10. Video-Endoskop System nach Anspruch 1 bis 7, **dadurch gekennzeichnet, dass** die Lampen (25, 26) als Metall-Halid-Lampen ausgebildet sind.

## Claims

1. A video endoscope system
- having a mounting (4) on which a cable winder (1) is supported so as to be rotatable,
- wherein a circular cover disc (10) is attached in fixed manner to the mounting (4) and closes off a central cavity (11) of the cable winder (1) that is open at the front ,
- having an endoscope (3) designed as a probe (2),
- the free end of which probe (2) has a video sensor (16) with wires (30) that are connected thereto and can be wound round the cable winder (1) to supply the video sensor (16) with electrical voltage and to transmit the electrical signals emitted by the video sensor,
- which wires (30) are arranged coaxially within the probe (2) and are connected electrically to a commutator ring (31) attached to the mounting (4),
- which probe (2) has at least one optical fibre cable (28, 29), the end of which is inserted in the cable winder (1),
- wherein the end faces of the optical fibres provided are arranged at the start of the at least one optical fibre cable (28, 29) opposite at least one daylight lamp (25, 26) that is supplied with electrical power via the commutator ring (31) and connected mechanically to the cable winder (1) in such manner that light can be coupled into the end faces,
- wherein the end faces of the optical fibres are arranged at the end of the at least one optical fibre cable (28, 29) close to the video sensor (16) so as to illuminate the surroundings to be viewed by the video sensor (16) with the light exiting from the ends of the optical fibres.

2. The video endoscope system as recited in claim 1, **characterised in that** sockets (14, 15) that are connected electrically to the commutator ring (31) are arranged on the cover disc (10) so as to output the signals supplied by the video sensor (16).

3. The video endoscope system as recited in either of claims 1 or 2, **characterised in that** a rechargeable battery (12) is arranged in the cavity (11) and is connected mechanically to the mounting (4) and electrically to the commutator ring (31), and that a socket (17) for direct current voltage that is connected electrically to the battery (12) is mounted on the cover disc (10).

4. The video endoscope system as recited in any of the preceding claims, **characterised in that** a power supply pack (13) connected mechanically to the mounting (4) is arranged in the cavity (11), and is connected electrically to the commutator ring (31), and that a socket for alternating current voltage (18) that is connected to the power supply pack (13) is arranged on the cover disc (10).

5. The video endoscope system as recited in any of the preceding claims, **characterised in that** the centrally located cavity (11) in the cable winder (1) is surrounded by an annular cavity (19), in which the lamps (25, 26) are arranged, and into which the start of the at least one optical fibre cable (28, 29) is inserted.

6. The video endoscope system as recited in claim 5, **characterised in that** a circuit (24) for controlling the video sensor (16) is arranged in the annular cavity (19).

7. The video endoscope system as recited in either of claims 5 or 6, **characterised in that** a fan (27) that is supplied with electrical current by the power supply pack (13) is arranged close to the lamps (25, 26) on the wall of the annular cavity (19) in order to cool the lamps (25, 26).

8. The video endoscope system as recited in any of the preceding claims, **characterised in that** the lamps (25, 26) are designed as arc lamps.

9. The video endoscope system as recited in any of claims 1 to 7, **characterised in that** the lamps (25, 26) are designed as are designed as xenon lamps.

10. The video endoscope system as recited in any of claims 1 to 7, **characterised in that** the lamps (25, 26) are designed as are designed as metal halide lamps.

## Revendications

1. Système de vidéo-endoscope comportant
- un châssis (4) sur lequel un tambour de câble (1) s'appuie en rotation,
- une rondelle de recouvrement de forme circulaire (10) étant reliée fixement au châssis (4), laquelle rondelle ferme une cavité centrale ouverte vers l'avant (11) du tambour de câble (1),
- un endoscope (3) réalisé sous forme de sone (2),
- laquelle sonde (2) présente à son extrémité libre un vidéo-capteur (16) auquel sont raccordées des conduites (30) pouvant s'enrouler sur le tambour de câble (1) et permettant d'alimenter le vidéo-capteur (16) en tension électrique et de transmettre les signaux électriques délivrés par le vidéo-capteur (16),
- lesquelles conduites (30) sont disposées coaxialement à l'intérieur de la sonde (2) et sont reliées électriquement à une bague collectrice (31) installée sur le châssis (4),
- laquelle sonde (2) comprenant au moins un câble de conducteur de lumière (28, 29) dont le début est introduit dans le tambour de câble (1),
- les surfaces frontales des conducteurs de lumière prévus étant disposées au début de l'au moins un câble de conducteur de lumière (28, 29) par rapport à au moins une lampe à lumière naturelle (25, 26) alimentée en énergie par le biais de la bague collectrice (31) et reliée mécaniquement au tambour de câble (1) de manière à ce que de la lumière puisse rentrer dans les surfaces frontales,
- les surfaces frontales des conducteurs de lumière étant disposées à l'extrémité de l'au moins un câble de conducteur de lumière (28, 29) à proximité du vidéo-capteur (16) afin d'éclairer l'environnement à capter par le vidéo-capteur (16) par la lumière sortant des extrémités des conducteurs de lumière.

2. Système de vidéo-endoscope selon la revendication 1, **caractérisé en ce que** des broches femelles (14, 15) reliées électriquement à la bague collectrice (31) sont disposées au niveau de la rondelle de recouvrement (10) afin d'émettre les signaux délivrés par le vidéo-capteur (16).

3. Système de vidéo-endoscope selon la revendication 1 ou 2, **caractérisé en ce que,** dans la cavité (11), est disposée une batterie rechargeable (12) qui est reliée mécaniquement au châssis (4) et est raccordée électriquement à la bague collectrice (31) et que, au niveau de la rondelle de recouvrement (10), une broche femelle (17) reliée électriquement à la batterie (12) pour tension continue est installée.

4. Système de vidéo-endoscope selon une des revendications précédentes, **caractérisé en ce que,** dans la cavité (11), est disposé un bloc d'alimentation (13) relié mécaniquement au châssis (4) et raccordé électriquement à la bague collectrice (31) et que, au niveau de la rondelle de recouvrement (10), une broche femelle reliée au bloc d'alimentation (13) pour tension alternative (18) est installée.

5. Système de vidéo-endoscope selon une des revendications précédentes, **caractérisé en ce que** la cavité (11) placée au centre du tambour de câble (1) est entourée d'une cavité de forme annulaire (19) dans laquelle les lampes (25, 26) sont disposées et dans laquelle le début de l'au moins un câble de conducteur de lumière (28, 29) est introduit.

6. Système de vidéo-endoscope selon la revendication 5, **caractérisé en ce que,** dans la cavité de forme annulaire (19), un circuit (24) de commande du vidéo-capteur (16) est disposé.

7. Système de vidéo-endoscope selon la revendication 5 ou 6, **caractérisé en ce que,** sur la paroi de la cavité de forme annulaire (19), à proximité des lampes (25, 26), un ventilateur (27) alimenté en courant par le bloc d'alimentation (13) et servant à refroidir les lampes (25, 26) est disposé.

8. Système de vidéo-endoscope selon une des revendications précédentes, **caractérisé en ce que** les lampes (25, 26) se présentent sous forme de lampes à arc.

9. Système de vidéo-endoscope selon les revendications 1 à 7, **caractérisé en ce que** les lampes (25, 26) se présentent sous forme de lampes au xénon.

10. Système de vidéo-endoscope selon les revendications 1 à 7, **caractérisé en ce que** les lampes (25, 26) se présentent sous forme de lampes à haloïde métallique.
